# EUROPEAN PATENT SPECIFICATION

(11) **EP 0 533 479 B1**
(45) Date of publication and mention of the grant of the patent: **09.04.1997**
(21) Application number: 92308494.1
(22) Date of filing: 17.09.1992
(51) Int. Cl.: C03B 9/195, C03B 9/197, C03B 9/40

(54) **A method and machine for the production of glassware articles by the press and blow process**
Verfahren und Vorrichtung zur Herstellung von Glasgegenständen nach dem Pressblasverfahren
Méthode et machine pour la fabrication d'articles en verre selon le procédé pressé-soufflé

(30) Priority: 17.09.1991 US 761410
(43) Date of publication of application: 24.03.1993
(73) Proprietor: VITRO CRISA CRISTALERIA, S.A. DE C.V., Monterrey, Nuevo Leon CP. 64580 (MX)
(72) Inventor: Tijerina-Ramos, Victor, Nuevo Leon CP64000 (MX)
(74) Representative: Stuart, Ian Alexander

(56) References cited:
- DE-C- 102 845
- DE-C- 129 211
- US-A- 1 979 211
- US-A- 3 142 552
- US-A- 4 062 668
- US-A- 4 063 918
- US-A- 4 152 132
- US-A- 4 152 133
- US-A- 4 200 449

## Description

The present invention is related to glassware article forming machines and more specifically to indexed rotary type, press-and-blow forming machines and a new method for the production of glass bottles, jars, tumblers, chimneys and seamless glassware articles.

There are many types of machines for the production of glassware articles by processes known as blow-and-blow or press-and-blow type.

Glass bottles are commonly produced by the blow-and-blow process in the so known I.S. forming machine, while jars, tumblers, chimneys and other glassware articles are normally produced by the press-and-blow process either in the so known "hot molds" for seamed glassware articles or in the "paste molds" for seamless glassware articles, and either in stationary type machines or in rotary type machines.

Stationary press-and-blow forming machines are represented by one known as E-Machine, disclosed in U.S. patent no. 3,142,552 of Martin, usually including six stationary individual sections (having single or multiple cavity), disposed in a semicircular fashion, each having a neck ring and a blank mold which receives a glass gob from a feeder through a stationary channel; afterwards, said glass gob is pressed in said blank mold by a pressing plunger, filling both the neck ring and the blank mold, forming a parison, then after said blank mold and pressing plunger are respectively retired, said naked parison is retained by said neck ring to allow some elongation by the action of gravity and by the reheating effect of the internal heat of the glass, and then a blow mold is closed around said parison to be blown by a blow head placed thereon to conform the final article which is finally taken out from the machine.

Said kind of machines are commonly used for the production of articles of intermediate quality because of the particular geometry, mainly in the glass gob charging step requiring substantially long channels for feeding each stationary section, which affect the thermal and physical conditions of the gob, i.e. scratching, deforming and cooling the gob, all of this impinging on the final quality of the article.

Furthermore, notwithstanding that relatively high velocities of production can be obtained with said machines, mainly because of the plurality of sections, they are limited only for intermediate runs of production as a consequence of the expensiveness of the tooling of said plurality of sections and of the inconvenience of the necessity of having a plurality of operators to take out the glassware articles from the machine, for finishing.

As to the press-and-blow process in rotary machines, this comprises feeding a molten glass gob, through a neck ring, to a blank mold, usually by a short feeding channel; pressing said gob in said blank mold by a pressing plunger, to form a parison in successive cycles of formation; retaining said parison by the neck ring to allow elongation thereof by gravity and by the reheating effect of the hot glass; said neck ring is normally travelling on an indexed or continuous rotary carrier having a plurality of stations corresponding in number to a number of blowing, take out and mold cooling positions enabled for the machine and mounted on a vertical rotary shaft; transporting the parison to other forming positions by rotating said carrier with the parison hanging from the neck ring; closing a partible blow mold, either stationary or travelling in said carrier, around said parison, and positioning a respective blow head on said blow mold, to blow the corresponding parison in said blow mold to the finished form of the article, in one or more blowing stations; and finally releasing said finished article by opening said blow mold and said neck ring and taking away said blow head, in a take out station.

In these rotary machines, the parison formation (one or more parisons in single or multiple cavity) is usually carried out in a parison forming station normally coinciding with the charging station.

The critical steps defining the cycle of formation, and which make the difference in the geometry of the several types of rotary machines, are the charging step, the pressing step, the reheating step for parison elongation and the blowing step, so that the corresponding time parameters can be handled in different ways and by the different types of machines, to produce:
1. High quality articles at low velocity of production, which economically allows short runs of production, at low cost of tooling, such as the machine disclosed in U.S. Patent No. 4,200,449 of Martin, known as "System 7", having a stationary pressing station including a pressing plunger and a blank mold (single or double cavity), and two forming stations spaced 180° apart from each other, each comprising the neck ring, blow mold and blow head travelling in a 180° bidirectional indexed rotary carrier. This machine produces high quality of articles because of the little manipulation of the glass gob through a short channel and its consequent fast charging. Notwithstanding of its low velocity of production, it allows to produce a wide variety of articles in short runs, at a low cost of tooling;
2. Intermediate quality, velocity and runs of production, at an intermediate cost of tooling such as the machines disclosed in patents No. 4,062,668, 4,063,918, 4,152,132 and 4,152,133 of Zapia, having a stationary pressing station and three stationary forming positions, each including a stationary blow mold, spaced 90° apart from each other, the neck rings and blow heads travelling in a 90° indexed rotary carrier. These types of machines produce only intermediate quality of articles because, notwithstanding of the fast and little manipulation of the charge and immediate pressing, the reheating step and the necessary transportation of the naked parison to the stationary blow mold, can cause a parison deformation and diverging with the blow molds due to an excessive manipulation of the parison, i.e. the parison can be pinched by the mold, with the consequent reduction in quality, and intermediate cost of tooling because it has to have machined several types of tooling such as blank molds, intermediate blank molds and blow molds.
3. Intermediate quality, high velocity of production, and long runs at a high cost of tooling, such as the machine disclosed in U.S. Patent No. 1,979,211 of Rowe, known as Hartford H-28, having from 12 to 18 pressing plungers, blank molds, neck rings, blow molds and blow heads travelling on a continuously rotary carrier. On trying to increase the velocity of production maintaining the intermediate quality and because of the critics of the forming cycle, the only alternative of this machine was to include a plurality of whole tooling stations which, after charging, the pressing, reheating and blown steps are carried out while travelling in the continuously rotary carrier, but with the consequent expensive tooling which makes it proper only for very long runs of production.

On researching about optimum distribution of the charging, reheating, pressing and blowing timing of the forming cycle in the "System 7" machine, applicant found that, in order to produce a very high quality and versatility of articles, at a higher velocity of production for short, intermediate and long runs of production at low cost of tooling, a compromise between the number of stations and the performance time of the respective mechanism has to be sought.

This conclusion led applicant to systematically analyze the forming cycle finding that it is highly desirable:
1. To have a machine geometry that allows to process a higher velocity of gob cuts per minute to maintain an optimum equilibrium between gob temperature, weight and form.
2. That the charging step be carried out in such a way that the glass gob falls, in the shortest possible time, from a very short feeding channel and in a centered way, into the blank mold, in order to avoid gob deformation.
3. That the pressing step be carried out in the least time possible with a proper coincidence between the blank mold and the pressing plunger in order to provide an even distribution of the glass in the parison walls, avoiding "whirlwind" or "settlewave" defects therein and an excessive heat extraction which could make difficult the article formation;
4. To have a controlled reheating and elongation of the parison so as to allow an even distribution of the heat in the parison and obtain an even distribution of the glass before final blow.
5. To have a versatility on the distribution of the article forming times, with possibility of distribution of the reheating and blowing times for a better distribution of the glass in the walls of the article providing a higher quality of articles.

Furthermore, applicant found that, if the blow molds are closed around the parison as soon as the blank mold and pressing plunger have been retired, the danger of deformation of the parison because of its naked transportation to the blowing stations and pinching of the parison with the blow mold, is avoided.

DE-C-129211 discloses a machine for the production of glassware articles by the press-and-blow process, comprising a stationary parison forming station including a molten glass gob feeding channel for providing a molten glass gob, and a pressing plunger to press said glass gob into a blank mold to form a parison in successive cycles of formation; blow head means; and four forming stations spaced 90° apart from each other and mounted around on a 90° indexed rotary carrier, each comprising a neck ring and a partible blow mold travelling in said rotary carrier, to rotate to a first forming position coinciding with the parison forming station, and to second, third and fourth positions, for reheating and elongation of the parison, blowing the parison to the final form of an article, taking out the article and mold cooling operations; and driving and control means to impart driving and operation sequence to the machine;

The machine of the present invention is characterised in that said stationary parison forming station includes a blank mold for receiving a glass gob fed thereto by said feeding channel; and said blow head means is provided by a respective blow head in each of said four forming stations.

It may be advantageous if the blank mold and pressing plunger are mounted in vertical guide rails so that they can be lifted and lowered respectively for the pressing operation and the gob feeding channel just swing to coincidence with the blank mold for the charging operation; if more than one blowing stations, preferably two, and consequently more than two forming stations are habilitated for the machine; and if the blow molds, with their corresponding blow heads, could travel with the neck rings on a 90° indexed rotary carrier.

Furthermore in order to impart versatility of operation of the machine with low velocity of production, to maintain capability of blowing immediately after charging and during transportation of the parison to the take out station at 90° from the charging station, applicant found the convenience that the rotation could be carried out both clockwise or counterclockwise to form an entire article in the charging and pressing station and deliver a finished article at the take out station as the second position.

These and other considerations led applicant to conceive as a preferred embodiment of the invention a forming machine having a blank mold and a pressing plunger, mounted in vertical guide rails so that they can be lifted and lowered respectively to a centered coincidence with each other for a pressing operation, and a short gob feeding channel which swings to coincidence with the blank mold for the charging operation, all placed as a stationary parison forming station; and four forming stations spaced 90° apart from each other travelling in the rotary carrier mounted on a 90° indexed rotary shaft for an optimum distribution of times, each equipped with a blow head, a neck ring and a blow mold so as to provide a first forming position coinciding with the parison forming station, and a second, third and fourth forming positions for reheating, blowing, and take out operations.

In this way, after parison formation, the parison is retained by the neck ring and after a short controlled reheating time for parison elongation, a blow mold is closed around said parison and transported to a second and third forming position placed 90° apart from each other wherein the parison is blown to the final form of the article and at the fourth forming position the finished article is delivered.

A suitable process for the production of glassware articles by using the above described machine, may comprise feeding a molten glass gob from a glass gob feeder to a blank mold, pressing said molten glass gob in said blank mold by a pressing plunger, to form a parison in a stationary charging and parison forming station, retaining the parison by a neck ring travelling to form an entire article in the charging and pressing station and deliver a finished article at the take out station as the second position.

These and other considerations lead applicant to conceive a forming machine having a blank mold and a pressing plunger, mounted in vertical guide rails so that they can be lifted and lowered respectively to a centered coincidence with each other for a pressing operation, and a short gob feeding channel which swings to coincidence with the blank mold for the charging operation, all placed as a stationary parison forming station; and four forming stations spaced 90° apart from each other travelling in the rotary carrier mounted on a 90° indexed rotary shaft for an optimum distribution of times, each equipped with a blow head, a neck ring and a blow mold so as to provide a first forming position coinciding with the parison forming station, and a second, third and fourth forming positions for reheating, blowing, and take out operations.

In this way, after parison formation, the parison is retained by the neck ring and after a short controlled reheating time for parison elongation, a blow mold is closed around said parison and transported to a second and third forming positions placed 90° apart from each other wherein the parison is blown to the final form of the article and at the fourth forming position the finish article is delivered.

A suitable process for the production of glassware articles by using the above described machine, may comprise feeding a molten glass gob from a glass gob feeder to a blank mold, pressing said molten glass gob in said blank mold by a pressing plunger, to form a parison in a stationary charging and parison forming station, retaining the parison by a neck ring travelling around on a 90° indexed rotary carrier comprising four forming stations, each having a respective neck ring, blow mold and blow head, then closing a blow mold travelling on said rotary carrier, around said parison retained by said neck ring, in said parison forming station, and transporting said parison within said blow mold, to a second, third and fourth forming positions spaced 90° apart from each other, to blow said parison within said blow mold to a finished form, to take out said finished article from the blow mold and to cool the blow mold and neck ring, preparing it for another cycle of formation, repeating the same operation for each of the three remaining stations of the rotary carrier.

Thus preferred embodiments of the invention may enable one to obtain one or more of the following objects: to provide a press-and-blow forming machine and a method for the production of high quality glassware articles at a high velocity of production at a low cost of tooling for short, intermediate or long runs of production; to provide a press-and-blow forming machine of the nature above disclosed, comprising at least a glass gob feeding channel, a blank mold and a pressing plunger mounted on a stationary parison forming station, and four forming stations spaced 90° apart from each other and mounted around on a 90° indexed rotary carrier, each comprising respective blow heads, neck rings and blow molds travelling on said rotary carrier, so as to provide a first forming position coinciding with the parison forming station, and a second, third and fourth positions for reheating, blowing, and take out operations; to provide a press-and-blow forming machine of the nature above disclosed, having the blank mold and pressing plunger mounted on vertical guide rails for a centered coincidence therebetween in the parison forming station, and a short feeding channel swinging into coincidence with the blank mold for a centered glass gob feeding operation; to provide a press-and-blow forming machine of the nature above disclosed, allowing a wide versatility of operation processes; to provide a new method for the production of high quality glassware articles, of the nature above disclosed, comprising forming a parison in successive cycles of formation in a stationary parison forming station, and blowing the parison through a first forming position coinciding with said parison forming station, and in a second third and fourth forming positions for finally blowing, take out and mold cooling operations; to provide a method of the above disclosed nature, providing more than one blowing station.

According to the present invention in one embodiment there is provided a machine for the production of glassware articles by the press-and-blow process, comprising a stationary parison forming station including a molten glass gob feeding channel for providing a molten glass gob, a blank mold receiving a glass gob fed thereto and a pressing plunger to press said glass gob into said blank mold to form a parison in successive cycles of formation; and four forming stations spaced 90° apart from each other and mounted around on a 90° indexed rotary carrier, each comprising a blow head, neck ring and blow mold travelling in said rotary carrier, to rotate to a first forming position coinciding with the parison forming station, and to a second, third and fourth positions, for reheating and elongation of the parison, blowing the parison to the final form of an article, taking out the article and mold cooling operations; and driving and control means to impart driving and operation sequence to the machine.

Each blow head may be retained by drive means supported on the carrier, to place said blow head over said neck ring for blowing the parison retained by said neck ring, into the blow mold, to a finished form of an article at one or more forming positions, and to take out said blow head once the article is finished. Each blow head may comprise a blow means to provide a blow to form a finished article. Each blow head may comprise a blow pipe to be introduced on the parison, to provide a blow to form a finished article. Each blow head may comprise means for providing a puff and means for providing a finishing blow.

Said 90° indexed rotary carrier may be mounted on a 90° indexed rotary shaft rotating in an axis parallel to the axis of said parison forming station, driven by means to impart it clockwise or counterclockwise indexed 90° rotary movement to a first position coinciding with the parison forming station, and to second, third and fourth forming positions for reheating, blowing, take out and mold cooling stations. Said 90° indexed rotary carrier may comprise control means for imparting a predetermined velocity profile for the 90° indexed rotary movement.

The machine may include cooling means including nozzles and passages to provide a cooling fluid to the blow mold, neck ring and bottom plate once the blow mold has released a finished glassware article at the take out position.

The machine may include cooling and heating means for partially cooling and heating said parison and finished article.

A preferred embodiment is a machine for the production of glassware articles by the press-and-blow process, comprising:
a stationary parison forming station comprising a support base, a column supported on said base, retaining vertical guide rails, and at least a blank mold and a corresponding pressing plunger, both slide mounted on the vertical guide rails and having drive means to impart them lineal upwardly and downwardly movements along said guide rails, to a centered coincidence with each other in a vertical charging and pressing axis for a glass gob charging and pressing operation;
at least a molten glass gob feeding channel mounted on oscillatory drive means, between said blank mold and said pressing plunger, to oscillate said feeder channel to coincidence with said blank mold to feed a glass gob when the blank mold is in an upper feeding position, and out of coincidence to allow the pressing plunger to get down and press said glass gob into said blank mold to form a parison.
a 90° indexed rotary carrier centrally mounted in a 90° indexed vertical rotary shaft for rotation in an axis parallel to the axis of said parison forming station, comprising a first, second, third and fourth forming stations spaced 90° apart from each other around the axis of rotation of said carrier, and including drive means supported on the base, to impart an indexed 90° rotary movement to said carrier, to a first forming position coinciding with said parison forming station, and to a second, third and fourth forming positions, for reheating, article finishing, take out and mold cooling operations;
each of said first, second, third and fourth stations of said carrier comprising:
at least a neck ring held by said carrier to sequentially rotate to a corresponding station, and comprising gripping means to grip a neck of a recently formed parison, and drive means to keep normally closed said gripping means around the neck of said parison and to open said gripping means to release said neck once an article is finished;
at least a partible blow mold held by an opening and closing mechanism retained by frame means coupled to said carrier and having drive means coupled to said opening and closing mechanism for closing said partible blow mold under the neck ring surrounding a recently formed parison and opening it to take out the article when it is finished;
at least a blow head retained by drive means supported on the carrier, to place said blow head over said neck ring for blowing the parison retained by said neck ring, into the blow mold, to a finished article at one or more forming positions; and
at least a bottom plate carried by drive means supported on said carrier, to place said bottom plate under the blow mold when it is closed at the first forming station, to complete the bottom of said blow mold;
cooling means mounted on said carrier, to cool each blow mold and neck ring; and
control means for controlling the whole operation of the machine.

According to the present invention in a second embodiment, there is provided a method for the production of glassware articles, by feeding molten glass gobs in successive cycles of formation to a press-and-blow type machine, comprising:
a first forming step including: forming at least a first parison at a stationary parison forming station comprising a gob feeding channel, a blank mold and a pressing plunger; retaining said first parison at a first forming position coinciding with said parison forming station by a neck ring of a first forming station of a 90° indexed rotary carrier having first, second, third and fourth forming stations each having at least a neck ring, a partible blow mold and a blow head; and closing said blow mold around said parison, and placing said blow head on the neck ring and blow mold, at said parison forming station;
a second forming step including rotating said first station of said rotary carrier through 90° to a second forming position providing a first blow into said first parison, while repeating the first forming step at said parison forming station with the second forming station to provide a second parison;
a third forming step including rotating said first forming station through 90° to a third forming position, providing a final blow to said first parison to form an article, while repeating said first forming step with said third forming station for forming a third parison and repeating said second step for the second parison;
a fourth forming step including rotating said first station through 90° to a fourth forming position, removing said blow head and opening said blow mold and neck ring releasing said finished article to take it out from the machine, while repeating the first forming step for a fourth parison, the second forming step for the third parison and the third forming step for the second parison;
and finally rotating said first station through 90° to the first forming position while cooling said blow mold and neck ring, to repeat another cycle of formation.

Preferably the method includes one or more of the following:
placing a bottom plate under the blow mold of each forming station of said rotary carrier, from the first forming position and removing it when it is at the fourth forming position;
providing a puff into the parison when it is in the first forming position coinciding with said parison forming station, to initially expand the parison within said blow mold;
providing a puff into the parison when the blow mold is still open;
rotating the neck ring of each forming station of said rotary carrier, within the blow mold, to produce seamless glassware articles;
and/or partially cooling and heating the parison and/or the article at the fourth and first forming positions.

A preferred embodiment is a method for the production of glassware articles in a press-and-blow glassware forming machine, comprising:
a first forming step including placing a first forming station of a 90° indexed rotary carrier comprising a first, second, third and fourth forming stations each having at least a neck ring, a partible blow mold, a blow head and a bottom plate, at a first forming position coinciding with a stationary parison forming station including at least a gob delivering channel, a blank mold and a pressing plunger; feeding a glass gob through said channel into said blank mold and pressing said gob into said blank mold and neck ring by said pressing plunger, to form a first parison; removing said feeding channel, blank mold and pressing plunger, retaining said first parison by said neck ring, for a reheating and preliminary elongation effect; and placing the bottom plate under the blow mold and closing the partible blow mold of the first forming station of said rotary carrier, around said first parison under said neck ring and placing the blow head on the neck ring and blow mold to provide a preliminary puff into said parison, at said parison forming station;
a second forming step including rotating 90° said first forming station of said rotary carrier, to a second forming position providing a second forming position and repeating the first forming step, for the second station of said rotary carrier which is now placed at said parison forming station, to form a second parison therein, while the blow head of said first forming station providing a first finishing blow to said first parison at said second forming position;
a third forming step including rotating 90° said first forming station of said rotary carrier, from the second forming position to a third forming position repeating the first forming step for the third station of said rotary carrier which is now at the parison forming station, to form a third parison; and repeating the second forming step for the second forming station of said rotary carrier which is now at the second forming position, while providing a second final blow to said first parison to finally form of the article; and
a fourth forming step including rotating said first forming station of said 90° rotary carrier to place said first forming station at a fourth forming position, repeating the first forming step for the fourth forming station of said rotary carrier which is now at the stationary parison forming station to form a fourth parison; repeating the second forming step for said third station of said rotary carrier; and repeating the third forming step for said second station of said rotary carrier, while the blow head is removed and the neck ring and blow mold are opened at a fourth forming position, to release a recently formed article to be taken out;
and finally rotating 90° said first forming station of said rotary carrier to place it again at the parison forming station, while cooling said blow mold and neck ring, to repeat another cycle of formation.

These and other objects and advantages of the press-and-blow forming machine of the present invention will be apparent to those persons having ordinary skill in the art, from the following detailed description of the invention provided as an specific embodiment illustrated in the accompanying drawings in which:

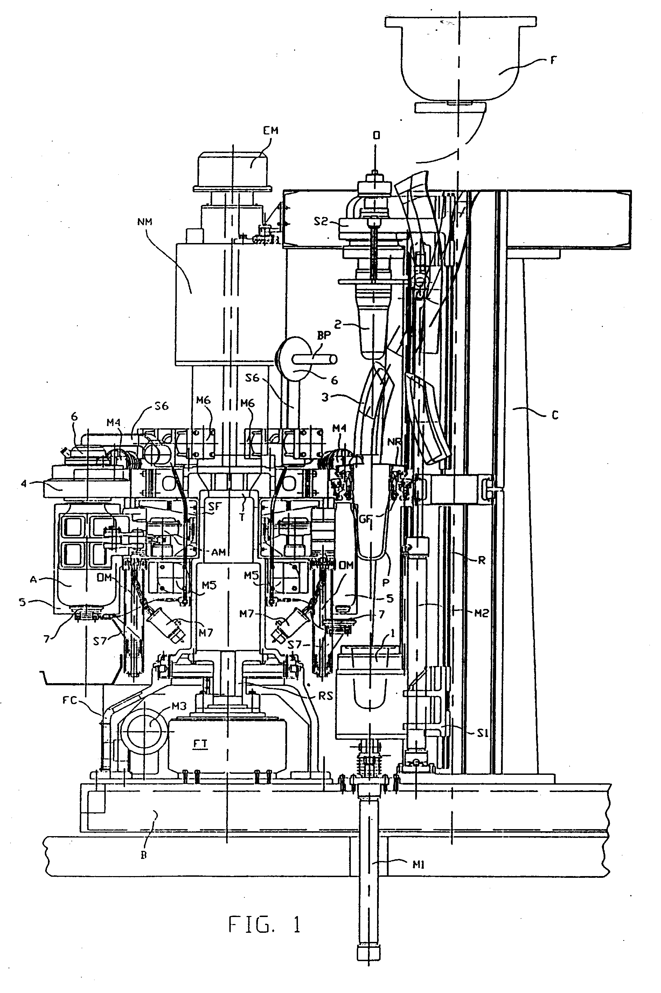

Figure 1 is a side elevation view of the machine for the production of glassware articles, of the present invention, showing only two forming stations; and
Figure 2 is a partial schematic view of the machine of Figure 1, illustrating a cycle of formation.

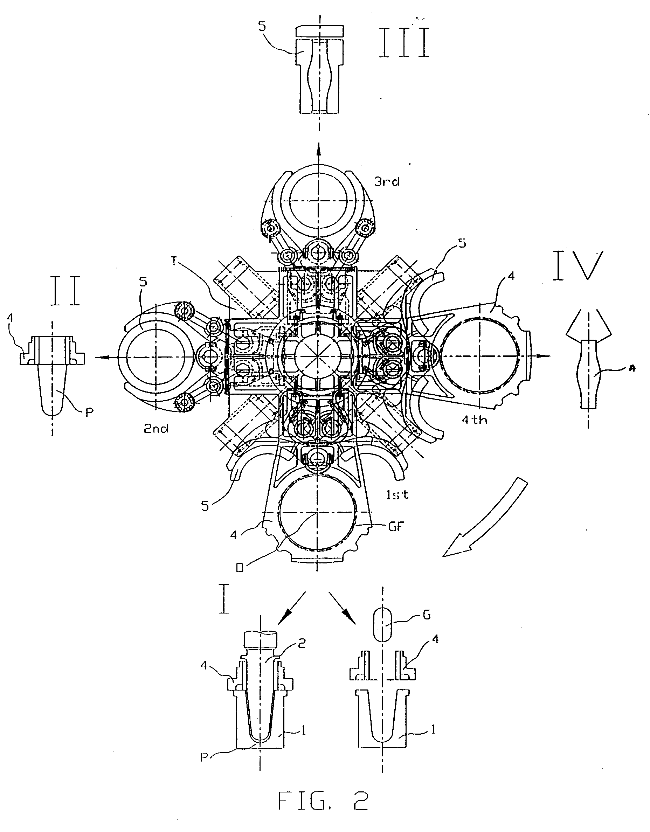

For convenience a preferred embodiment of the apparatus for the production of glassware articles by the press-and-blow process, of the present invention, will be first described referring to the accompanying drawings, as comprising:
a stationary parison forming station I including:
   a support base B and a vertical column C supported on the base B, which retains vertical guide rails R having lower ends and upper ends; and
   a blank mold 1 and a corresponding pressing plunger 2, each respectively slide mounted on the lower ends and the upper ends of the vertical guide rails R, by respective supports S1 and S2, and each driven by a respective fluid motor M1, M2 to impart them respective upwardly and downwardly movements, to coincidence with each other at a glass gob charging and pressing axis 0, and a corresponding molten glass gob feeder channel 3 mounted on respective axis (not shown) between said blank mold 1 and said pressing plunger 2, to vertically oscillate, by a driven mechanism (not illustrated), into coincidence with the glass gob feeder F and the blank mold 1 at said pressing axis 0 when the latter is firstly driven to an upper position, to feed a corresponding molten glass gob into said blank mold 1, and to vertically oscillate out of coincidence to allow the pressing plunger 2 to be driven down to press said molten glass gob fed to said blank mold 1, to form a parison P;
a horizontally rotary table T, rotary supported on a Ferguson casing FC retained on the support base B, having first 1st, second 2nd, third 3rd and fourth 4th stations spaced 90° apart from each other (Figure 2), and which is centrally mounted on an indexed rotary vertical shaft RS parallel to the pressing axis 0 of the stationary parison forming station I, and which is driven by a motor M3 coupled to a Ferguson transmission FT for imparting it an indexed clockwise or counterclockwise 90° rotary movement, to a first forming position I coinciding with said stationary parison forming station I and to a second II, third III and fourth IV forming positions, for article finishing, take out and mold cooling operations;
each of said first 1st, second 2nd, third 3rd and fourth 4th stations of said rotary table T comprising:
a neck ring 4 retained by said rotary table T, having parison gripping fingers GF and a mechanism NR to open and close said gripping fingers GF to hold the parison once it is formed and release it once an article A is finished;
a partible blow mold 5 held by an opening and closing mechanism AM driven by a motor M5, both retained by a support frame SF coupled to said rotary table T, to close said blow mold 5 around a recently formed parison P under said neck ring 4, and open it to release the article once it is finally blown to a finished form;
a blow head 6 having a blow pipe BP, retained by a support arm S6 coupled to a cylinder M6 retained on the table T, to articulately lift and down said blow head 6 to be placed on the neck ring 4, to provide a final blow into said parison P to form a finished article A in one or more of said forming stations, preferably at said first I, second II and third III forming positions and release it at the take out position IV; and
a bottom plate 7 retained by a support arm S7 coupled to an oscillating mechanism OM supported by the support frame SF to said table T, and driven by a motor M7 for oscillating it in, lifting it up to the bottom of said blow mold 5, to form the bottom of the article, and lowering it out and oscillating out said bottom plate 7, once the article A is finished at the take out position IV;
cooling means (not shown) to provide a cooling fluid to said blank mold 1, pressing plunger 2 and feeding channel 3 in said parison forming station I, as well as to provide a cooling fluid to said neck ring 4, blow mold 5 and bottom plate 7, in said rotary table T, once the blow mold 5 has delivered a finished glassware article A in said take out position IV; and
an electronic control including an electronic manifold EM and a pneumatic manifold NM, for controlling the whole operation of the machine and particular drive motors and transmissions.

It should be understood that the blank mold 1, pressing piston 2, gob feeder channel 3, neck ring 4, blow mold 5, blow head 6 and bottom plate 7, can be multiplied for multiple cavity and that respective driving mechanisms can be designed to perform the actuation necessary for these mechanisms.

Furthermore, the vertical guide rails R may be a pair of guide rails, for each of said blank mold 1 and the pressing piston 2, respectively.

Control systems including digital valves and the like, can also be introduced to control the velocity profile of the pressing piston 2 and of the rotation of said rotary table T, as well as any other component which may need it.

Also, partially cooling and heating nozzles can be conveniently introduced for cooling and heating particular zones of the parisons and finished articles as needed.

A motor M4 can also be introduced to provide rotation to said neck ring 4 to rotate the article while hot, when said blow mold 5 is of the paste mold type for the production of seamless glassware articles.

Manifolds and conduits are also provided for feeding the fluids, either pneumatic or hydraulic, necessary for the forming process. Also conventional elements can be introduced to the blowing head 6, to provide a swirl blow for suitably blowing the article.

Referring to the drawings of the above disclosed machine, a new method for the production of glassware articles by using the machine, in accordance with the present invention, comprises:
a first forming step including: placing a first station 1st of a rotary table T at a first forming position I coinciding with a parison forming station I; closing gripping fingers GF of a neck ring 4 of said first station 1st of table T, at said parison forming station I; simultaneously oscillating in a glass gob feeding channel 3 into coincidence with a glass gob feeder F and sliding up a blank mold 1, to feed a glass gob G into said blank mold 1; oscillating out said glass gob feeding channel 3, and sliding down a pressing plunger 2 to the blank mold 1, to press said glass gob G to form a first parison P filling said blank mold 1 and neck ring 4; sliding down said blank mold 1 and sliding up said pressing plunger 2, retaining the neck of said first parison P gripped by the gripping fingers GF of said neck ring 4, for a reheating and preliminary parison elongation effect; closing a partible blow mold 5 of said first station 1st of said rotary table T around said parison P under said neck ring 4, oscillating up a bottom plate 7 to be placed under the blow mold 5 and placing a blow head 7 on the neck ring 4 and blow mold 5, at the parison forming station I; and providing a puff into said parison P at said parison forming station I to initially expand the parison P within the blow mold 5;
a second forming step including: rotating 90° said rotary table T with said blow mold 5 of said first station 1st, to a second forming position II; and repeating the same first forming step as described above, for a second station 2nd of said rotary table T which is now placed in said parison forming station I, for form a second parison at said parison forming station I, while providing a first finishing blow to said first parison P of said first station 1st of table T at said second forming position II;
a third forming step including: rotating 90° said table T with said blow mold 5 of said first station 1st, from the second forming position II to a third forming position III; repeating the first forming step for the third station 3rd of said rotary table T which is now at the parison forming station I, to form a corresponding third parison P; and repeating the same second forming step for the second station 2nd of said rotary table T which is now at the second forming position II while providing a second finishing blow to said first parison P of said first station 1st of table T to finally form the article; and
a fourth forming step including: rotating 90° said rotary table T to place said first station 1st at a fourth forming position IV; repeating the first forming step for the fourth station 4th of said rotary table T which is now at the parison forming station I to form a fourth parison P; repeating the second forming step for said third station 3rd of the rotating table T; and repeating the third forming step for said second station 2nd of said rotary table T, while the blow head 6 of said first station 1st is lifted, the blow mold 5 is opened, the bottom plate 7 is retired and said gripping fingers GF are opened to release a recently formed article in said fourth forming position IV;
and finally rotating 90° said rotary table T to place again said first station 1st of said rotary table T at the parison forming station I, while providing a mold cooling operation to said blow mold 5, neck ring 4 and bottom plate 7, to repeat another cycle of formation.

Finally, it has to be understood that the machine and method for the production of glassware articles, of the present invention, are independent from each other, i.e. the machine is not limited to necessarily carry out this method although it is the most desirable to be performed, but it can be operated in whatever way which could be advisable for a specific line and article of production, similarly, the method could be performed with any other suitable machine which could be operated to carry out this method.

## Claims

1. A machine for the production of glassware articles by the press-and-blow process, comprising a stationary parison forming station (I) including a molten glass gob feeding channel (3) for providing a molten glass gob, and a pressing plunger (2) to press said glass gob into a blank mold (1) to form a parison in successive cycles of formation; blow head means (6); and four forming stations spaced 90° apart from each other and mounted around on a 90° indexed rotary carrier (T), each comprising a neck ring (4) and a partible blow mold (5) travelling in said rotary carrier, to rotate to a first forming position (I) coinciding with the parison forming station, and to second, third and fourth positions (II, III, IV), for reheating and elongation of the parison, blowing the parison to the final form of an article, taking out the article and mold cooling operations; and driving and control means (M3, FT, EM, NM) to impart driving and operation sequence to the machine; characterised in that said stationary parison forming station (I) includes a blank mold (1) for receiving a glass gob fed thereto by said feeding channel (3); and said blow head means (6) is provided by a respective blow head in each of said four forming stations.

2. The machine according to claim 1, wherein said stationary parison forming station (I) further comprises a support base (B) and a column (C) supported on said base, retaining at least a vertical guide rail (R) in which said blank mold (1) and pressing plunger (2) are slide mounted.

3. The machine according to claim 1 or 2 wherein said blank mold and said pressing plunger are slide mounted on a vertical guide rail, each comprising drive means to impart to them respectively upward and downward movements along said guide rail in a centered coincidence with each other, to press a glass gob fed to said blank mold, to form a parison.

4. The machine according to claim 2 or 3 wherein said pressing plunger (2) comprises control means for imparting a pressing profile to said plunger.

5. A machine in accordance with any preceding claim wherein said gob feeding channel (3) is mounted on an axis between said blank mold (1) and said pressing plunger (2), and includes drive means for imparting it oscillatory movements into coincidence with the glass gob feeder and said blank mold when the latter is in an upper position to be fed with a corresponding glass gob, and out of coincidence to allow the pressing plunger to get down and press said glass gob into said blank mold to form a parison.

6. A machine in accordance with any preceding claim wherein each neck ring (4) is held by said carrier means to sequentially rotate to a corresponding station, and comprises gripping means (GF) to grip a neck of a recently formed parison, and drive means to keep normally closed said gripping means around the neck of said parison and to open said gripping means to release said neck once an article is formed.

7. A machine in accordance with any preceding claim wherein each neck ring (4) comprises drive means for imparting to it a rotary movement for a paste mold type forming process for the production of seamless glassware articles.

8. A machine in accordance with any preceding claim wherein each blow mold (5) is a partible blow mold held by an opening and closing mechanism (AM) retained by frame means (SF) coupled to said carrier and having drive means (M5) coupled to said opening and closing mechanism for closing said partible blow mold under the neck ring around a recently formed parison and opening it to take out an article once the parison has blown to a finished form.

9. A machine in accordance with any preceding claim wherein each blow mold (5) is a partible blow mold including a bottom plate attached to said frame means coupled to said carrier, and having oscillatory drive means to place the bottom plate under said partible blow mold to form an article and to take away said bottom plate once the article is finished.

10. A machine in accordance with any preceding claim wherein each blow head (6) includes blow means (BP) and is retained by drive means (S6,M6) supported on the carrier, to place said blow head over said neck ring for blowing the parison retained by said neck ring, into the blow mold, to a finished form of an article at one or more forming positions, and to take out said blow head once the article is finished

11. A method for the production of glassware articles, by feeding molten glass gobs in successive cycles of formation to a press-and-blow type machine, comprising:
a first forming step including: forming at least a first parison at a stationary parison forming station comprising a gob feeding channel, a blank mold and a pressing plunger; retaining said first parison at a first forming position coinciding with said parison forming station by a neck ring of a first forming station of a 90° indexed rotary carrier having first, second, third and fourth forming stations each having at least a neck ring, a partible blow mold and a blow head; and closing said blow mold around said parison, and placing said blow head on the neck ring and blow mold, at said parison forming station;
a second forming step including rotating said first station of said rotary carrier through 90° to a second forming position; providing a first blow into said first parison, while repeating the first forming step at said parison forming station with the second forming station to provide a second parison;
a third forming step including rotating said first forming station through 90° to a third forming position, providing a final blow to said first parison to form an article, while repeating said first forming step with said third forming station for forming a third parison and repeating said second step for the second parison;
a fourth forming step including rotating said first station through 90° to a fourth forming position, removing said blow head and opening said blow mold and neck ring, releasing said finished article to take it out from the machine, while repeating the first forming step for a fourth parison, the second forming step for the third parison and the third forming step for the second parison;
and finally rotating said first station through 90° to the first forming position while cooling said blow mold and neck ring, to repeat another cycle of formation.

12. The method of claim 11 wherein an initial blow is provided into each parison during said first forming step.

## Patentansprüche

1. Vorrichtung zur Herstellung von Glasgegenständen durch das Preßblasverfahren, umfassend eine stationäre Külbelformungsstation (I), die einen Kanal (3) zur Zufuhr des geschmolzenen Glasballens und einen Preßkolben (2) zum Einpressen des Glasballens in eine Vorform (1) enthält, um in aufeinanderfolgenden Formgebungszyklen ein Külbel zu bilden; ein Blaskopfmittel (6); und vier Formungsstationen, die in einem Winkel von 90° zueinander versetzt und um einen 90°-Indexier-Drehträger (T) herum montiert sind, jeweils umfassend einen Halsring (4) und eine teilbare Blasform (5), die sich im Drehträger bewegt, um sich zu einer ersten Formungsposition (I), die der Külbelformungsstation entspricht, und zu einer zweiten, dritten und vierten Position (II, III, IV) zu bewegen, um das Külbel erneut zu erhitzen und zu recken, es zur endgültigen Form eines Gegenstands zu blasen, den Gegenstand herauszunehmen und Formkühlungsvorgänge durchzuführen; und Antriebs- und Steuermittel (M3, FT, EM, NM), um eine Antriebs- und Betriebsabfolge für die Vorrichtung festzulegen; dadurch gekennzeichnet, daß die stationäre Külbelformungsstation (I) eine Vorform (1) zur Aufnahme eines durch den Zufuhrkanal (3) eingebrachten Glasballens enthält; und das Blaskopfmittel (6) durch einen jeweiligen Blaskopf in jeder der vier Formungsstationen gebildet wird.

2. Vorrichtung nach Anspruch 1, worin die stationäre Külbelformungsstation (I) weiters eine Stützbasis (B) und eine auf der Basis getragene Säule (C) umfaßt, wobei zumindest eine vertikale Führungsschiene (R) festgehalten wird, in der die Vorform (1) und der Preßkolben (2) gleitend montiert sind.

3. Vorrichtung nach Anspruch 1 oder 2, worin die Vorform und der Preßkolben auf einer vertikalen Führungsschiene gleitend montiert sind, jeweils umfassend ein Antriebsmittel, um sie jeweils in Auf- und Abwärtsrichtung entlang der Führungsschiene in einer zentrierten Koinzidenz miteinander zu bewegen, sodaß ein der Vorform zugeführter Glasballen gepreßt wird, um ein Külbel zu bilden.

4. Vorrichtung nach Anspruch 2 oder 3, worin der Preßkolben (2) ein Steuermittel umfaßt, um den Kolben mit einem Preßprofil zu versehen.

5. Vorrichtung nach einem der vorhergehenden Ansprüche, worin der Ballenzufuhrkanal (3) auf einer Achse zwischen der Vorform (1) und dem Preßkolben (2) montiert ist und ein Antriebsmittel enthält, um ihn in Hin- und Herbewegungen in die Koinzidenz mit dem Glasballenzuführer und der Vorform zu versetzen, wenn sich letztere in einer oberen Position befindet, um einen korrespondierenden Glasballen aufzunehmen, und ihn aus der Koinzidenz zu versetzen, um es dem Preßkolben zu ermöglichen, sich hinunterzubewegen und den Glasballen zur Bildung eines Külbels in die Vorform zu pressen.

6. Vorrichtung nach einem der vorhergehenden Ansprüche, worin jeder Halsring (4) durch das Trägermittel gehalten wird, um sich nacheinander zu einer korrespondierenden Station zu drehen, und ein Greifmittel (GF) zum Greifen eines Halses eines neugebildeten Külbels sowie ein Antriebsmittel umfaßt, um das Greifmittel normalerweise geschlossen um den Hals des Külbels zu halten und es zu öffnen, damit der Hals losgelassen wird, sobald ein Gegenstand geformt ist.

7. Vorrichtung nach einem der vorhergehenden Ansprüche, worin jeder Halsring (4) ein Antriebsmittel umfaßt, um ihn für ein Formungsverfahren vom paste-blow-Typ zur Herstellung nahtloser Glasgegenstände in Drehbewegung zu versetzen.

8. Vorrichtung nach einem der vorhergehenden Ansprüche, worin jede Blasform (5) eine teilbare Blasform ist, die durch einen Öffnungs- und Schließmechanismus (AM) gehalten wird, der durch ein Rahmenmittel (SF) fixiert wird, das mit dem Träger gekoppelt ist, umfassend ein Antriebsmittel (M5), das mit dem Öffnungs- und Schließmechanismus gekoppelt ist, um die teilbare Blasform unter dem Halsring um ein neugebildetes Külbel zu schließen und sie zu öffnen, um einen Gegenstand herauszunehmen, sobald das Külbel zu einer fertigen Form geblasen wurde.

9. Vorrichtung nach einem der vorhergehenden Ansprüche, worin jede Blasform (5) eine teilbare Blasform ist, die eine Bodenplatte umfaßt, die am mit dem Träger gekoppelten Rahmenmittel befestigt ist, und ein hin- und hergehendes Antriebsmittel aufweist, um die Bodenplatte unter der teilbaren Blasform zu positionieren, um einen Gegenstand zu formen und die Bodenplatte zu entfernen, sobald der Gegenstand fertig ist.

10. Vorrichtung nach einem der vorhergehenden Ansprüche, worin jeder Blaskopf (6) ein Blasmittel (BP) enthält und durch ein Antriebsmittel (S6, M6) gehalten wird, das auf dem Träger abgestützt ist, um den Blaskopf über dem Halsring zu positionieren, um das durch den Halsring gehaltene Külbel in die Blasform zu einer fertigen Form eines Gegenstands an einer oder mehreren Formungspositionen zu blasen und um den Blaskopf herauszunehmen, sobald der Gegenstand fertig ist.

11. Verfahren zur Herstellung von Glasgegenständen durch Zufuhr geschmolzener Glasballen in aufeinanderfolgenden Formungszyklen zu einer Preßblasvorrichtung, umfassend:
einen ersten Formungsschritt, der folgendes enthält: Formen zumindest eines ersten Külbels an einer stationären Külbelformungsstation mit einem Ballenzufuhrkanal, einer Vorform und einem Preßkolben; Halten des ersten Külbels an einer ersten Formungsposition, die mit der Külbelformungsstation übereinstimmt, durch einen Halsring einer ersten Formungsstation eines 90°-Indexier-Drehträgers mit einer ersten, zweiten, dritten und vierten Formungsstation, die jeweils zumindest einen Halsring, eine teilbare Blasform und einen Blaskopf aufweisen; und Schließen der Blasform um das Külbel sowie Positionieren des Blaskopfes am Halsring und an der Blasform in der Külbelformungsstation;
einen zweiten Formgebungsschritt, der folgendes enthält: Drehen der ersten Station des Drehträgers um 90° zu einer zweiten Formungsposition; erstes Blasen in das erste Külbel, während der erste Formgebungsschritt in der Külbelformungsstation mit der zweiten Formungsstation durchgeführt wird, um ein zweites Külbel bereitzustellen;
einen dritten Formgebungsschritt, der folgendes enthält: Drehen der ersten Formungsstation um 90° zu einer dritten Formungsposition, letztes Blasen in das erste Külbel zur Bildung eines Gegenstands, während der erste Formgebungsschritt mit der dritten Formungsstation durchgeführt wird, um ein drittes Külbel zu bilden, und Wiederholen des zweiten Schritts für das zweite Külbel;
einen vierten Formgebungsschritt, der folgendes enthält: Drehen der ersten Station um 90° zu einer vierten Formungsposition, Entfernen des Blaskopfs und Öffnen der Blasform und des Halsrings, Lösen des fertigen Gegenstands, um ihn aus der Vorrichtung zu nehmen, während der erste Formgebungsschritt für ein viertes Külbel, der zweite Formgebungsschritt für das dritte Külbel und der dritte Formgebungsschritt für das zweite Külbel durchgeführt wird;
und schließlich das Drehen der ersten Station um 90° zur ersten Formungsposition, während die Blasform und der Halsring gekühlt werden, um einen weiteren Formgebungszyklus zu wiederholen.

12. Verfahren nach Anspruch 11, worin während des ersten Formgebungsschritts ein erstes Blasen in jedes Külbel erfolgt.

## Revendications

1. Machine pour la fabrication d'articles en verre selon le procédé presse-soufflé, comportant une station de formation de paraison stationnaire (I) incluant un canal d'alimentation par gravité de verre fondu (3) pour fournir une paraison de verre fondu, et un plongeur de pression (2) pour presser ladite paraison de verre dans un moule ébaucheur (1) pour former une paraison dans des cycles de formation successifs; un moyen formant tête de soufflage (6); et quatre stations de formation espacées de 90° les unes des autres et montées autour d'un porteur rotatif indexé de 90° (T) , chacune comportant un moule de bague (4) et un moule finisseur divisible (5) se déplaçant dans ledit porteur rotatif, pour tourner vers une première position de formation (I) coïncidant avec la station de formation de paraison, et à des deuxième, troisième et quatrième positions (II, III, IV) pour réchauffer et allonger la paraison, pour souffler la paraison dans la forme finale d'un article, pour sortir l'article, et des opérations de refroidissement de moule; et des moyens d'entraînement et de commande (M3, FT, EM, NM) pour impartir une séquence d'entraînement et de fonctionnement à la machine; caractérisé en ce que ladite station de formation de paraison stationnaire (I) comporte un moule ébaucheur (1) destiné à recevoir une paraison de verre amenée à celui-ci par ledit canal d'alimentation (3); et ledit moyen formant tête de soufflage (6) est réalisé par une tête de soufflage respective dans chacune desdites quatre stations de formation.

2. Machine selon la revendication 1 , dans laquelle ladite station de formation de paraison stationnaire (I) comporte en outre une base de support (B) et une colonne (C) supportées sur ladite base, retenant au moins un rail de guidage vertical (R) sur lequel ledit moule ébaucheur (1) et ledit plongeur de pression (2) sont montés de façon coulissante.

3. Machine selon la revendication 1 ou 2, dans laquelle ledit moule ébaucheur et ledit plongeur de pression sont montés de façon coulissante sur un rail de guidage vertical, chacun comportant un moyen d'entraînement pour leur impartir respectivement des mouvements ascendant et descendant le long dudit rail de guidage suivant une coïncidence centrée l'un avec l'autre, pour presser une paraison de verre amenée audit moule ébaucheur, pour former une paraison.

4. Machine selon la revendication 2 ou 3, dans laquelle ledit plongeur de pression (2) comporte un moyen de commande pour impartir un profil de pression audit plongeur.

5. Machine selon l'une des revendications précédentes, où ledit canal d'alimentation par gravité (3) est monté sur un axe entre ledit moule ébaucheur (1) et ledit plongeur de pression (2) et inclut un moyen d'entraînement pour lui impartir des mouvements d'oscillation en coïncidence avec l'organe d'alimentation par gravité et ledit moule ébaucheur lorsque ce dernier se trouve dans une position supérieure pour être alimentée avec une paraison de verre correspondante, et hors coïncidence pour permettre au plongeur de pression de descendre et de presser ladite paraison de verre dans ledit moule ébaucheur pour former une paraison.

6. Machine selon l'une des revendications précédentes, dans laquelle chaque moule de bague 4 est tenu par ledit moyen porteur pour tourner séquentiellement vers une station correspondante, et comporte un moyen de préhension (GF) pour saisir un col d'une paraison qui vient d'être formée, et un moyen d'entraînement pour maintenir normalement fermé ledit moyen de préhension autour du col de ladite paraison et pour ouvrir ledit moyen de préhension pour relâcher ledit col lorsqu'un article est formé.

7. Machine selon l'une des revendications précédentes, où chaque moule de bague (4) comporte un moyen d'entraînement pour lui impartir un mouvement de rotation pour un procédé de formation du type à moule enduit pour la fabrication d'articles en verre sans couture.

8. Machine selon l'une des revendications précédentes, où chaque moule finisseur (5) est un moule finisseur divisible tenu par un mécanisme d'ouverture et de fermeture (AM) retenu par un moyen de châssis (SF) accouplé audit porteur et comportant un moyen d'entraînement (M5) accouplé audit mécanisme d'ouverture et de fermeture pour fermer ledit moule finisseur divisible sous le moule de bague autour d'une paraison qui vient d'être formée et pour l'ouvrir pour enlever l'article lorsque la paraison a été soufflée en une forme finie.

9. Machine selon l'une des revendications précédentes, dans laquelle chaque moule finisseur (5) est un moule finisseur divisible incluant une plaque de fond fixée audit moyen de châssis accouplé audit porteur, et comportant un moyen d'entraînement oscillant pour placer la plaque de fond sous ledit moule finisseur divisible pour former un article et pour enlever ladite plaque de fond lorsque l'article est fini.

10. Machine selon l'une des revendications précédentes, dans laquelle chaque tête de soufflage (6) comporte un moyen de soufflage (BP) et est retenu par un moyen d'entraînement (S6, M6) supporté sur le porteur, pour placer ladite tête de soufflage sur ledit moule de bague pour souffler la paraison retenue par ledit moule de bague dans le moule finisseur en une forme finie d'un article à une ou plusieurs positions de formation, et pour sortir ladite tête de soufflage lorsque l'article est fini.

11. Procédé pour la fabrication d'articles en verre, par une alimentation de paraisons de verre fondu en des cycles de formation successifs à une machine du type pressé-soufflé, comportant :
une première étape de formation incluant : former au moins une première paraison à une station de formation de paraison stationnaire comportant un canal d'alimentation par gravité un moule ébaucheur et un plongeur de pression; retenir ladite première paraison à une première position de formation qui coincide avec ladite station de formation de paraison par un moule de bague d'une première station de formation d'un porteur rotatif indexé suivant 90° comportant des première, deuxième, troisième et quatrième stations de formation présentant chacune au moins un moule de bague, un moule finisseur divisible et une tête de soufflage; et la fermeture dudit moule finisseur autour de ladite paraison et la mise en place de ladite tête de soufflage sur le moule de bague et le moule finisseur, à ladite station de formation de paraison:
une deuxième étape de formation incluant la rotation de ladite première station dudit porteur rotatif suivant 90° à une deuxième position de formation; la réalisation d'un premier soufflage dans ladite première paraison, tout en répétant la première étape de formation à ladite station de formation de paraison avec la deuxième étape de formation pour réaliser une deuxième paraison: une troisième étape de formation incluant la rotation de ladite première station de formation suivant 90° vers une troisième position de formation, la réalisation d'un soufflage final dans ladite première paraison pour former un article, tout en répétant ladite première étape de formation avec ladite troisième station de formation pour former une troisième paraison et en répétant ladite deuxième étape pour la deuxième paraison;
une quatrième étape de formation incluant la rotation de ladite première station suivant 90° à une quatrième position de formation, le retrait de ladite tête de soufflage et l'ouverture dudit moule finisseur et du moule de bague, le relâchement dudit article fini pour le sortir de la machine tout en répétant la première étape de formation pour une quatrième paraison, la deuxième étape de formation pour la troisième paraison et la troisième étape de formation pour la deuxième paraison;
et enfin la rotation de ladite première station suivant 90° à la première position de formation tout en refroidissant ledit moule finisseur et moule de bague, pour répéter un autre cycle de formation.

12. Procédé selon la revendication 11, où un soufflage initial est réalisé dans chaque paraison pendant ladite première étape de formation.
